# EUROPÄISCHE PATENTSCHRIFT

(11) **EP 0 427 019 B1**
(45) Veröffentlichungstag und Bekanntmachung des Hinweises auf die Patenterteilung: **29.06.1994**
(21) Anmeldenummer: 90119901.8
(22) Anmeldetag: 17.10.1990
(51) Int. Cl.: B62D 27/06

(54) **Bordwandabschlussprofil**
End profile for a side panel
Profilé d'extrémité pour une ridelle

(30) Priorität: 09.11.1989 DE 3937248
(43) Veröffentlichungstag der Anmeldung: 15.05.1991
(73) Patentinhaber: PWP SA, CH-1530 Payerne (CH)
(72) Erfinder: Schäfer, Götz, CH-1530 Payerne (CH)
(74) Vertreter: Müller, Enno, Dipl.-Ing.

(56) Entgegenhaltungen:
- DE-A- 2 801 973
- FR-A- 1 584 566
- US-A- 4 091 746

## Beschreibung

Die Erfindung betrifft ein Bordwandabschlußprofil, vorzugsweise für einen Lastkraftwagen, mit einem Gegenhalter, zur Zusammenwirkung insbesondere mit einer Bordwand-Verriegelungsrunge, wobei der Gegenhalter auf dem Profil von außen aufsitzt und mit einem in dem Profil angeordneten Halterungsteil zur Befestigung an dem Profil unter Ein- bzw. Durchgriff durch eine Durchtrittsöffnung in dem Profil und Anlage des Halterungsteils an einer Innenfläche des Profils verbunden ist, welche Durchtrittsöffnung eine Versetzung der Verbindung Gegenhalter/Halterungsteil (im gelockerten Zustand) in einer Richtung (höhenmäßig) zuläßt (siehe z.B. DE-A-2801973).

Bei Kraftfahrzeugen, insbesondere Lastkraftfahrzeugen, ist es bekannt, Bordwände oder Elemente von Bordwänden in einem Fassungsprofil, dem Bordwandabschlußprofil, zu lagern. Beispielsweise können schwenkbare Bordwände von Lkw's derartig ausgebildet sein. Die Bordwandabschlußprofile sind beispielsweise als Aluminium-Strangpressprofile hergestellt. In den Bordwandabschlußprofilen sind gewöhnlich Bordwandelemente gefaßt. Zur Halterung wirken die Bordwandabschlußprofile mit Verriegelungselementen zusammen, beispielsweise einer Bordwand-Verriegelungsrunge. Die Bordwand-Verriegelungsrunge besitzt einen oder mehrere Verschlußriegel, die - im Einbauzustand - vertikal bewegbar sind. Bei einem Ausfahren des Verschlußriegels, beispielsweise nach oben, fährt dieser Verschlußriegel von unten in den mit dem Bordwandabschlußprofil fest verbundenen Gegenhalter ein.

Bei einer Ausführungsform eines Bordwandabschlußprofils ist an der der Bordwand-Verriegelungsrunge zugewandten Schmalseite des Profils ein durchgehender Längsschlitz ausgebildet. Dieser Längsschlitz wird von Halterungsschrauben durchgriffen, die den Gegenhalter durchsetzen und mit einem, im Inneren des Profils befindlichen, Halterungsteil verschraubt werden. Der Längsschlitz läßt eine Verschiebung der Verbindung Gegenhalter/Halterungsteils in vertikaler Richtung, d. h. Höhe oder Tiefe, zu. Um eine Verschiebung in Querrichtung zu der vertikalen Verstellbarkeit möglichst zu hindern, sind bei der hier in Rede stehenden Ausführungsform an dem Gegenhalter Eingriffsnasen ausgebildet, die in den Längsschlitz eingreifen und entsprechend etwa eine Breite besitzen, die der Breite des Längsschlitzes entspricht. Oder die Befestigungselemente, d. h. die Schrauben sind mit einer solchen Breite bzw. Dicke ausgebildet, daß diese gleichfalls der Öffnungsbreite des Längsschlitzes entspricht. Aufgrund der fertigungsmäßig gegebenen Toleranzen besteht jedoch im Verriegelungszustand zwischen der Bordwand-Verriegelungsrunge, speziell dem Verschlußriegel und dem Gegenhalter immer ein mehr oder weniger großes Spiel. Dieses führt im Betrieb zu Geräuschbelästigungen. Auch verursacht dies eine erhöhte Materialbeanspruchung.

Ausgehend von dem vorbeschriebenen Stand der Technik stellt sich der Erfindung die Aufgabe, ein Bordwandabschlußprofil anzugeben, das eine möglichst spielfreie Zusammenwirkung zwischen dem Bordwandabschlußprofil und der Bordwand-Verriegelungsrunge ermöglicht.

Diese Aufgabe ist bei der im Anspruch 1 angegebenen Erfindung gelöst.

Erfindungsgemäß ist vorgesehen, daß eine der zugewandten Anlageflächen des Halterungsteils und/oder des Profils für eine formschlüssige Halterung strukturiert sind und daß die Durchtrittsöffnung einer Versetzung der Verbindung Gegenhalter/Halterungsteil in zwei Richtungen zuläßt. Bei der Montage einer Lastwagen-Bordwand kann aufgrund einer solchen Ausgestaltung die Lage des Gegenhalters individuell angepaßt werden. Auch kann die Lage des Gegenhalters etwa nach einer gewissen Betriebszeit individuell geändert bzw. angepaßt werden. Dadurch, daß zumindest eine der zugewandten Anlageflächen des Halterungsteils und/oder des Profils strukturiert sind, ergibt sich eine formschlüssige Halterung des Gegenhalters. Und zwar bevorzugt auf einer Innenfläche des Profils. Äußerlich ist dann also das Profil unverändert. Bei einer einfachen Ausführungsform kann beispielsweise schon bei einer Ausführung des Halterungsteils aus einem härteren Werkstoff, beispielsweise Stahl, und einem entsprechenden Anziehen der (Schraub-)Verbindung zwischen dem Gegenhalter und dem Halterungsteil die formschlüssige Verbindung allein aufgrund einer Profilierung/Strukturierung des Gegenhalterteils erreicht werden. Bei entsprechend hartem Werkstoff bzw. unterschiedlicher Werkstoffpaarung kann eine Eindrückung einer Strukturierung in die Gegenfläche hierzu ausgenutzt werden. In Ausgestaltung der Erfindung ist vorgesehen, daß an beiden Elementen, dem Halterungsteil und dem Profil eine Strukturierung ausgebildet ist die Strukturierung in Längsrichtung des Profils, d. h. im Einbauzustand in Höhenrichtung ausgerichtet ist. Dies ist vorteilhaft im Hinblick auch auf das angesprochene Herstellungsverfahren. Eine solche Strukturierung/Profilierung der Innenflächen des Bordwandabschlußprofils und/oder des Halterungsteils (wenn letzteres auch im Strangpressverfahren etwa hergestellt ist) läßt sich herstellungsmäßig leicht vorsehen. Dadurch, daß die Durchtrittsöffnung mit einer solchen Größe vorgesehen ist, daß sie eine Versetzung der Verbindung Gegenhalter/Halterungsteil in zwei Richtungen zuläßt, ist eben nicht nur eine höhenmäßige Versetzung der Verbindung Gegenhalter/Halterungsteil möglich, sondern auch eine Versetzung in Breitenrichtung. Die Versetzung in Breitenrichtung ist aber nicht mit einem Nachteil hinsichtlich der Stabilität der Halterung des Gegenhalters an dem Bordwandabschlußprofil erkauft. Die Erfindung sieht auch vor, daß die Strukturierung durch längsverlaufende Rippen gebildet ist. Beispielsweise können die Rippen, die in das Profilinnere über eine Profiloberfläche vorragen, im Querschnitt mit einem Flankenwinkel von 60° ausgebildet sein. Die Höhe der Rippen kann beispielsweise 0,4 bis 0,8 vorzugsweise 0,6 mm sein. Es sind mehrere Rippen nebeneinander (im Querschnitt) angeordnet. Beispielsweise 4 Rippen. In weiterer Ausgestaltung ist auch vorgesehen, daß an dem Bordwandabschlußprofil die Strukturierung an zwei zueinander versetzten Innenwänden des Profils ausgebildet ist. Gewöhnlich sind die Innenwände um 90° zueinander versetzt bzw. in einem Winkel von 90° zueinander verlaufend angeordnet. Diese Ausgestaltung ermöglicht es, das Bordwandabschlußprofil wahlweise an einer Bordwandseite oder als Heckprofil zu verwenden und gleichwohl jeweils den Vorteil zu haben, die Gegenhalter in Breitenrichtung variabel, jedoch gesichert anbringen und befestigen zu können. Gewöhnlich wird der Gegenhalter mittels Schrauben, die von Seiten des Gegenhaltes aus durch das Bordwandprofil in das Halterungsteil eingeschraubt werden, an dem Profil gesichert. Es sind aber auch andere Befestigungsmöglichkeiten zwischen Gegenhalter und Halterungsteil möglich. Beispielsweise können an dem Halterungsteil feste Stifte, etwa mit einem vorderen Gewinde, angebracht sein, die die Wand des Bordbandabschlußprofils durchsetzen. In diesem Zusammenhang schlägt die Erfindung weiter vor, daß die Halterungsausnehmungen, sei es in dem Halterungsteil oder in dem Gegenhalterungsteil bezüglich einer Quererstreckung des Gegenhalters bzw. des Halterungsteils außermittig angeordnet sind. Dies gibt zusätzliche Variationsmöglichkeiten hinsichtlich einer Verschiebung bzw. Versetzung in Breiten- bzw. Tiefenrichtung des Bordwandabschlußprofils, unter Ausnutzung und Berücksichtigung der beengten Raumverhältnisse für eine Abstützung des Halterungsteils an eine Innenwand des Bordwandabschlußprofils. Es ist auch bevorzugt, daß die Strukturierung der Anlage-Innenfläche des Profils beidseitig der Durchtrittsöffnung ausgebildet ist. Die Erfindung schlägt weiter vor, daß die Strukturierung darüberhinaus an der Anlagefläche des Halterungsteils ebenfalls beidseitig der Halterungsausnehmung ausgebildet ist. Wenn, wie bereits angesprochen, die Strukturierung an zwei zueinander winklig versetzten Innenwänden des Bordwandabschlußprofils ausgebildet ist, schlägt die Erfindung auch vor, daß die Durchtrittsöffnung zumindest in einer diesbezüglichen Wand des Bordwandabschlußprofils als Langloch ausgebildet ist. Bevorzugt sind dann über die Höhe des Bordwandabschlußprofils mehrere Langlöcher vorgesehen, während ansonsten eine durchgehende nut- bzw. schlitzartige Öffnung vorgesehen ist.

Nachstehend ist die Erfindung desweiteren anhand der beigefügten Zeichnung, die jedoch lediglich Ausführungsbeispiele zeigt, erläutert. Hierbei zeigt im einzelnen:
- Fig. 1: eine Seitenansicht eines Lkw's mit einer Bordwand mit Bordwandabschlußprofilen und Bordwand-Befestigungsrungen;
- Fig. 2: in perspektivischer und teilweise explosionsartiger Darstellung die zugehörigen Elemente des Profils und der Runge, nämlich

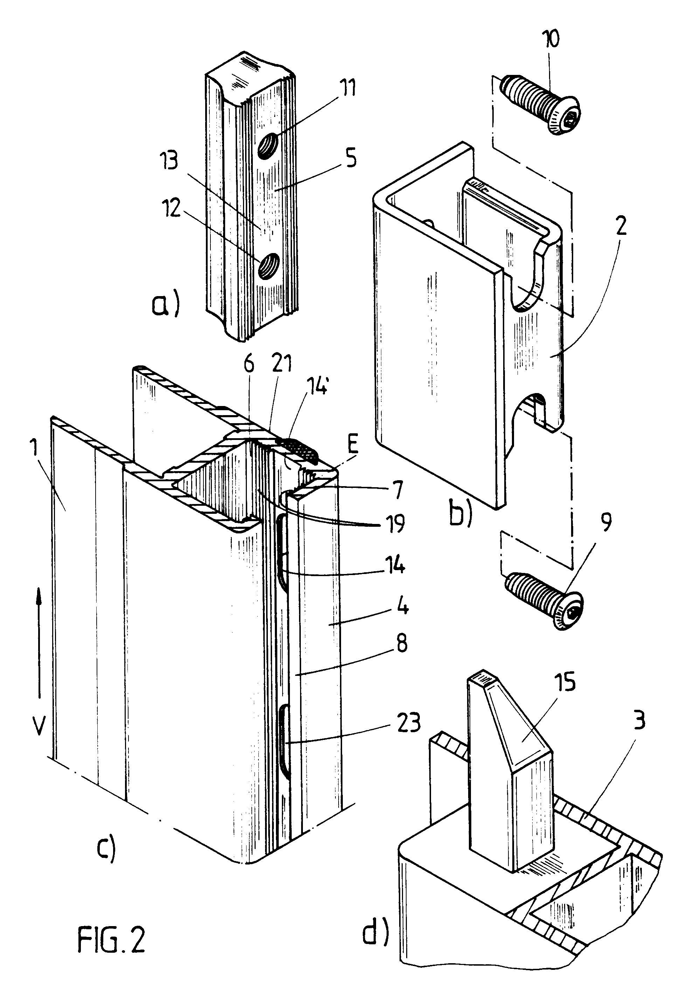

- Fig. 2 a: das Halterungsteil;
- Fig. 2 b: den Gegenhalter mit Halterungsschrauben;
- Fig. 2 c: einen Abschnitt des Bordwandabschlußpro fils;
- Fig. 2 d: einen Abschnitt der Befestigungsrunge;

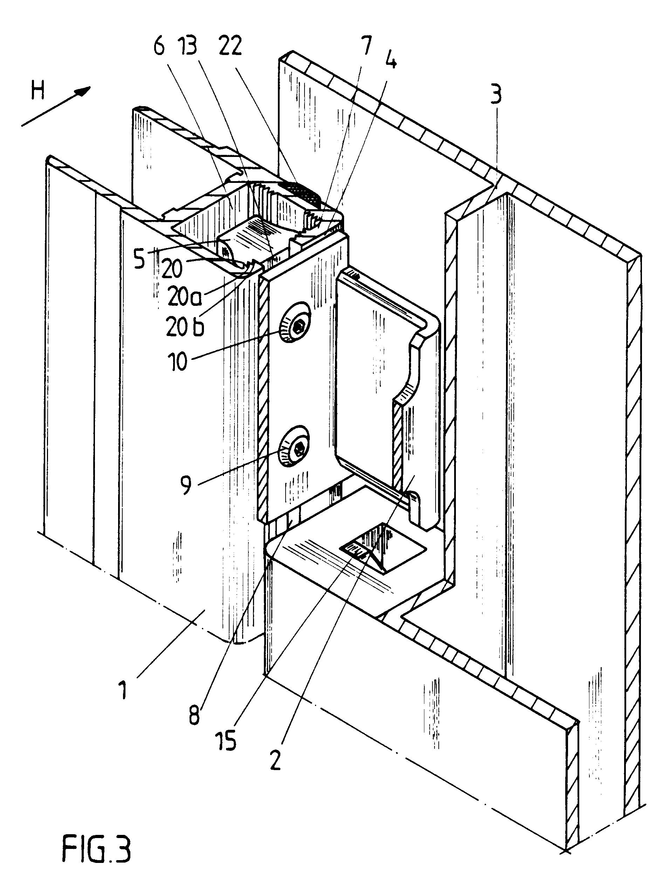

- Fig. 3: eine teilweise Darstellung des Bordwandabschlußprofils und der Befestigungsrunge in Zusammenwirkungsposition, bei zurückgezogenem Verschlußriegel;

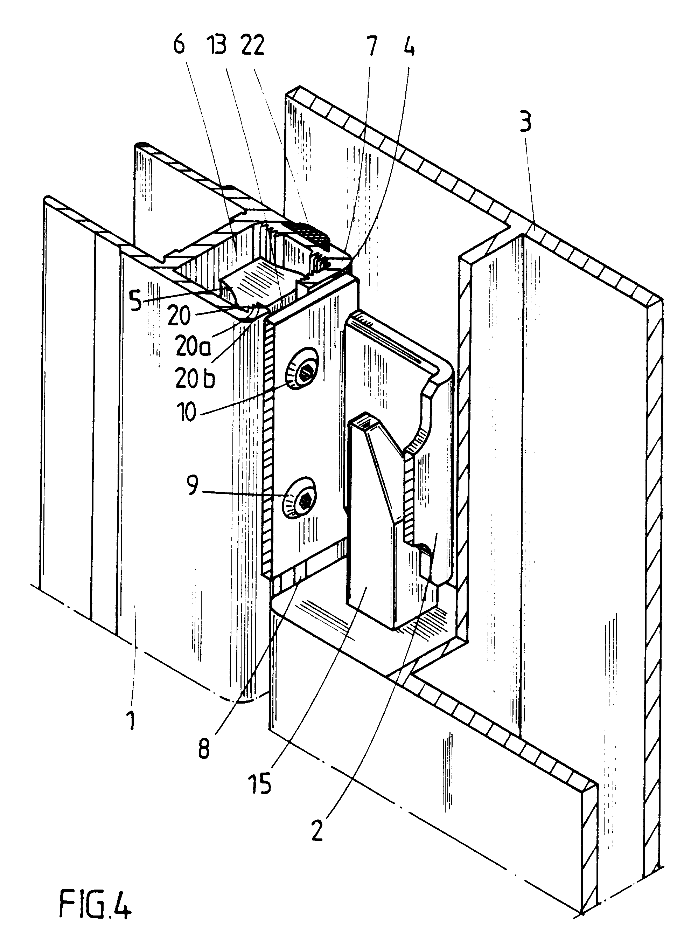

- Fig. 4: eine Darstellung gemäß Figur 3 bei ausgefahrenem Verschlußriegel;

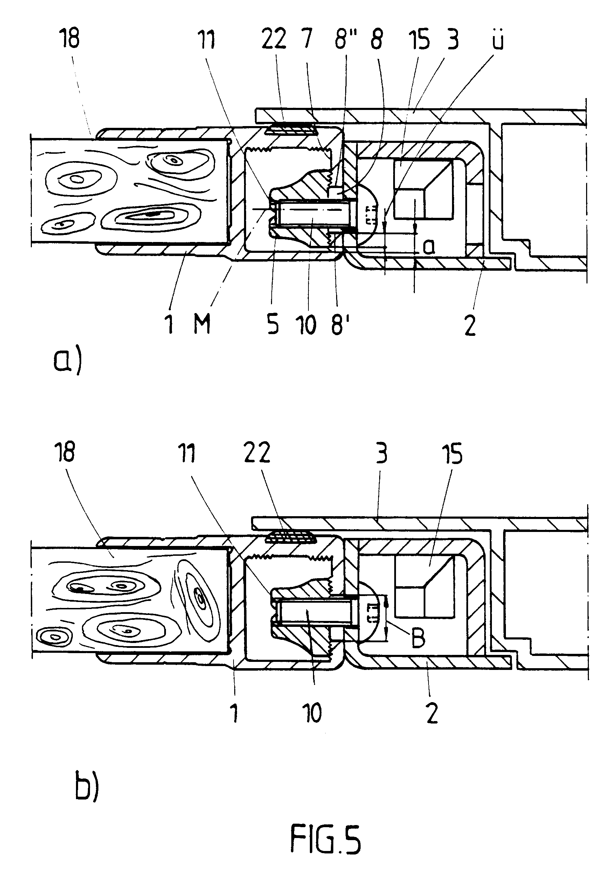

- Fig. 5 a, b: einen Querschnitt durch eine Verbindung Bordwandabschlußprofil/Befestigungsrunge mit einem Halterungsteil in zwei unterschiedlichen Einbaustellungen; und

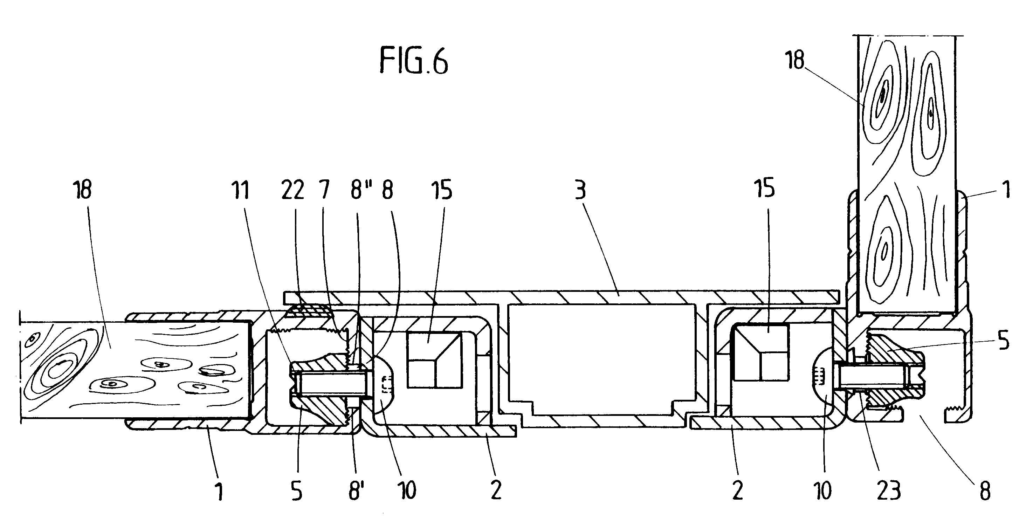

- Fig. 6: eine Querschnittsdarstellung gemäß Figur 5 a bzw. 5 b, mit einem weiteren Bordwandabschlußprofil als Rückwand-Eckprofil.

Dargestellt und beschrieben ist - zunächst mit Bezug zu Figur 2 - ein Bordwandabschlußprofil 1 mit einem Gegenhalter 2, zur Zusammenwirkung mit einer Bordwand-Verriegelungsrunge 3. Der Gegenhalter 2 sitzt im montierten Zustand auf dem Profil 1 von außen, auf der Profil-Stirnfläche 4, auf und ist mit einem Halterungsteil 5, das im Einbauzustand im Inneren des Profils 1, nämlich der Profilausnehmung 6, angeordnet ist, verbunden. An dem Profil 1, in der die Stirnfläche 4 ausbildenden Wand 7 ist eine Durchtrittsöffnung 8 ausgebildet, welche von Halterungsschrauben 9, 10 durchgriffen wird. Die Halterungsschrauben 9, 10 greifen in Halterungsausnehmungen 11, 12 in Form von Gewindebohrungen in dem Halterungsteil 5 ein. Im Einbauzustand liegt eine Anlagefläche 13 des Halterungsteiles 5 an einer Fläche 14 im Inneren 6 des Profils 1 an. In den Gegenhalter 2 ist in Verriegelungszustand ein Verschlußriegel 15 der Befestigungsrunge 3 eingefahren. Hierdurch ist das Bordwandabschlußprofil 1 mit der Befestigungsrunge 3 fest verbunden.

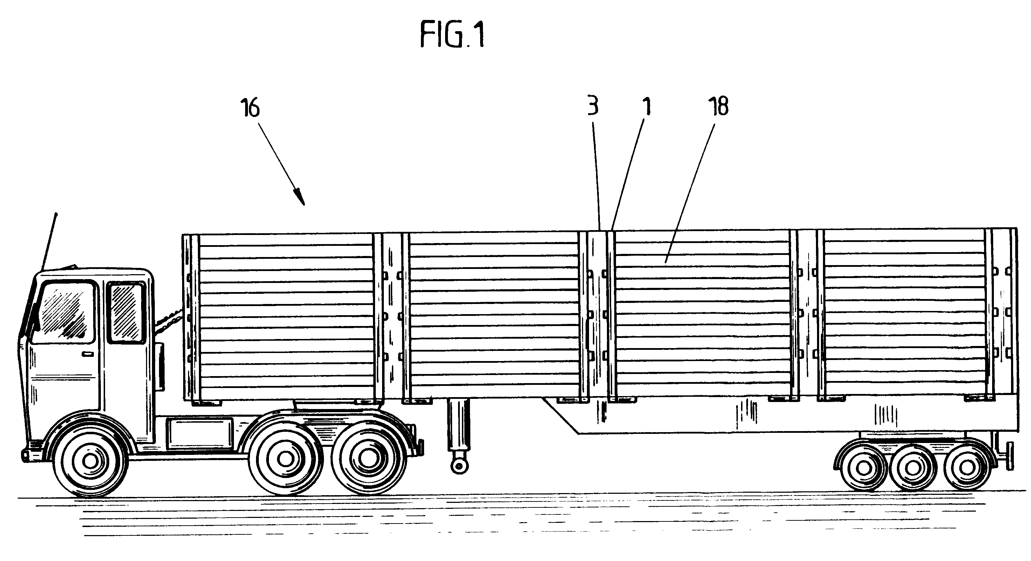

Mit Bezug Figur 1 sind derartige Bordwandabschlußprofile 1 und Befestigungsrungen 3 beispielsweise bei Lkw's 16 verwendet. In die Bordwandabschlußprofile 1, deren zugewandte Öffnungsseiten 17, sind Bordwandelemente 18 eingeschoben und darin befestigt. Durch Entriegeln der Verbindung Befestigungsrunge 3/Bordwandabschlußprofil 1 können die Bordwände elementweise abgenommen oder beispielsweise heruntergeklappt werden. Mit Bezug wiederum zu Figur 2 ist die Fläche 14 im Inneren des im wesentlichen rechteckig bzw. quadratisch ausgebildeten Abschnittes des Bordwandabschlußprofiles 1 mit einer längsverlaufenden, in Richtung einer vertikalen Erstreckung V im Einbauzustand des Bordwandabschlußprofiles 1 ausgerichteten Strukturierung 19 versehen. Im einzelnen besteht die Struktuierung 19 aus längsverlaufenden Rippen, die sich über eine Ebene E der Fläche 14 nach Innen erheben. Die Struktierung 19 bzw. die Rippen 20, 20 a, 20 b usw. können grundsätzlich auch in die Wand 7 eingelassen sein, so daß sie sich von der Ebene E ausgehend nach Außen erstrecken. Der im wesentlichen rechteckige bzw. quadratische Abschnitt des Bordwandabschlußprofiles 1, in welchem der Gegenhalter 2 mittels des Halterungsteiles 5 befestigt ist, besitzt auch an einer zu der Wand 7 rechtwinklig (im Querschnitt) verlaufenden Wand 21 eine Strukturierung 19, in gleicher Weise wie zuvor in Bezug auf die Wand 7 beschrieben. In dieser Wand 21 ist bevorzugt eine Scheuerleiste 22 aus Polyamid angebracht. Da in der Wand 21 eine Durchtrittsöffnung 8 im Sinne einer durchgehenden längsverlaufenden Öffnung entsprechend der Wand 7 nicht möglich ist, sind in der Wand 21 bevorzugt Langlöcher 23 ausgebildet, die gleichfalls einen Durchtritt, beispielsweise der Halterungsschrauben 9, 10 ermöglichen.

In Figur 3 ist ein Querschnitt durch eine Anordnung Bordwandabschlußprofil 1/Bordwandverriegelungsrunge 3 dargestellt, mit teilweise aufgebrochener Bordwand-Verriegelungsrunge 3 und teilweise aufgeschnittenem Gegenhalter 2. Es ist zu erkennen, daß der Verschlußriegel 15 sich in einer zurückgezogenen Stellung befindet, das Bordwandabschlußprofil 1 ist noch nicht mit der Bordwand-Verriegelungsrunge 3 verriegelt. Der Gegenhalter 2 ist mittels der Schrauben 9, 10, die als Imbusschrauben ausgeführt sind, mit dem im Inneren 6 des im wesentlichen geschlossenen, quadratischen bzw. rechteckigen Abschnitts des Bordwandabschlußprofiles 1 befindlichen Halterungsteil 5 verschraubt. Aufgrund der Strukturierung 19, nämlich der an dem Halterungsteil 5 und der Fläche 14 des Bordwandabschlußprofiles 1 ausgebildeten Rippen 20, 20 a, 20 b usw, die ineinandergreifen, ist die Verbindung Halterungsteil/Gegenhalter in Tiefen- bzw. Breitenrichtung H gesichert.

Figur 4 zeigt eine Figur 3 entsprechende Darstellung bei in den Gegenhalter 2 eingefahrenem Verschlußriegel 15.

Insbesondere den Figuren 5 a und 5 b ist zu entnehmen, daß die Halterungsausnehmungen, beim Ausführungsbeispiel die beiden Halterungsausnehmungen 11 und 12, bezüglich einer Mitte M des Halterungsteiles 5 außermittig angeordnet sind. Dies ermöglicht es, die Durchtrittsöffnung 8 mit einer relativ großen Breite B auszubilden. Obgleich hierbei einseitig nur ein relativ schmaler Abschnitt a der Fläche 14 bzw. der Wand 7 verbleibt, der strukturiert werden kann, d. h. mit Rippen 20, 20 a, 20 b usw. versehen werden kann, kann gleichwohl die gesamte Breite B der Durchtrittsöffnung 8 für eine Verschiebung des Gegenhalters 2 ausgenutzt werden, ohne daß eine Überdeckung ü Halterungsteil 5/ Wand 7 bzw. Fläche 14 zu klein wird. Ausgehend etwa von einer Situation gemäß Figur 5 a, in welcher sich die Halterungsschraube 10 nahe der (in der Zeichnung) unteren Seitenwand 8′ der Durchtrittsöffnung 8 befindet, kann unter Umdrehung des Halterungsteiles 5 die Halterungsschraube 10 bis nahe an die Seitenwand 8˝ der Durchtrittsöffnung 8 versetzt werden.

Figur 6 zeigt eine Darstellung, bei welcher das Bordwandabschlußprofil 1 als Rückwand-Eckprofil eingesetzt ist. Hierbei ist eine Halterungsschraube 9 bzw. 10 durch ein Langloch 23 geführt, bei entnommener Scheuerleiste 22. Die Durchtrittsöffnung 8 bleibt ungenutzt oder kann etwa mit einem Verblendstück verschlossen werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung von Bedeutung sein.

## Patentansprüche

1. Bordwandabschlußprofil (1), vorzugsweise für einen Lkw, mit einem Gegenhalter (2), zur Zusammenwirkung insbesondere mit einer Bordwand-Verriegelungsrunge (3), wobei der Gegenhalter (2) auf dem Profil (1) von außen aufsitzt und mit einem in dem Profil (1) angeordneten Halterungsteil (5) zur Befestigung an dem Profil (1) unter Ein- bzw. Durchgriff durch eine Durchtrittsöffnung (8, 23) in dem Profil (1) und Anlage des Halterungsteils (5) an einer Innenfläche (14) des Profils (1) verbunden ist, welche Durchtrittsöffnung (8, 23) eine Versetzung der Verbindung Gegenhalter (2)/Halterungsteil (5) (in gelockertem Zustand) in einer Richtung (höhenmäßig) zuläßt, dadurch gekennzeichnet, daß eine der zugewandten Anlageflächen (13, 14) des Halterungsteils (5) und/oder des Profils (1) für eine formschlüssige Halterung strukturiert sind und daß die Durchtrittsöffnung (8, 23) einer Versetzung der Verbindung Gegenhalter (2) /Halterungsteil (5) in zwei Richtungen zuläßt.

2. Bordwandabschlußprofil (1) nach Anspruch 1, dadurch gekennzeichnet, daß die Strukturierung (19) in Längsrichtung des Profils (1), d. h. im Einbauzustand in Höhenrichtung (V) ausgerichtet ist.

3. Bordwandabschlußprofil (1) nach einem oder mehreren der vorhergehenden Ansprüche, dadurch gekennzeichnet, daß die Strukturierung (19) durch längsverlaufende Rippen (20, 20 a, 20 b) gebildet ist.

4. Bordwandabschlußprofil (1) nach einem oder mehreren der vorhergehenden Ansprüche, dadurch gekennzeichnet, daß die Strukturierung (19) an zwei um ca. 90° zueinander versetzten Innenflächen (14, 14′) des Profils (1) ausgebildet ist.

5. Bordwandabschlußprofil (1) nach einem oder mehreren der vorhergehenden Ansprüche, wobei das Halterungsteil (5) Halterungsausnehmungen (11, 12) aufweist, dadurch gekennzeichnet, daß die Halterungsausnehmungen (11, 12) bezüglich einer Quererstreckung des Halterungsteils (5) außermittig angeordnet sind.

6. Bordwandabschlußprofil (1) nach einem oder mehreren der vorhergehenden Ansprüche, dadurch gekennzeichnet, daß die Strukturierung (19) der AnlageInnenfläche (14) des Profils (1) beidseitig der Durchtrittsöffnung (8, 23) ausgebildet ist.

7. Bordwandabschlußprofil (1) nach einem oder mehreren der vorhergehenden Ansprüche, dadurch gekennzeichnet, daß die Strukturierung (19) an der Anlagefläche (13) des Halterungsteils (5) beidseitig der Halterungsausnehmungen (11, 12) ausgebildet ist.

8. Bordwandabschlußprofil (1) nach einem oder mehreren der vorhergehenden Ansprüche, dadurch gekennzeichnet, daß bei Ausbildung der Strukturierung (19) an zwei um 90° zueinander versetzten Innenflächen (14, 14′) die Durchtrittsöffnung (8, 23) zumindest in einer diesbezüglichen Wand (7, 21) des Profils als Langloch (23) ausgebildet ist.

## Claims

1. Tailboard end profile (1), preferably for a truck, with an arm bracket (2) for cooperating especially with a tailboard locking stanchion (3), in which the arm bracket (2) is seated externally on the profile (1) and is connected with a holding part (5), arranged in the profile (1), for fixing to the profile (1) by engagement in or through an opening (8, 23) in the profile (1) and the holding part (5) resting against the inner surface (14) of the profile (1), which opening (8, 23) permits a displacement of the combination of arm bracket (2)/holding part (5) (in the relaxed state) in one direction (heightwise), **characterised** in that one of the facing contact surfaces (13, 14) of the holding part (5) and/or the profile (1) is constructed for holding in a form-locking manner and that the opening (8, 23) permits a displacement of the combination of the arm bracket (2)/holding part (5) in two directions.

2. Tailboard end profile (1), according to claim 1, **characterised** in the structure (19) is aligned in the longitudinal direction of the profile (1), i.e. in the upward direction (V) when installed.

3. Tailboard end profile (1), according to at least one of the preceding claims, **characterised** in that the structure (19) is formed of longitudinally extending ribs (20, 20a, 20b).

4. Tailboard end profile (1), according to at least one of the preceding claims, **characterised** in that the structure (19) is constructed of two inner surfaces (14, 14') of the profile (1) offset by approximately 90° to each other.

5. Tailboard end profile (1), according to at least one of the preceding claims, in which the holding profile (5) has holding recesses (11, 12), **characterised** in that the holding recesses (11, 12) are arranged off-centre in relation to a transverse positioning of the holding profile (5).

6. Tailboard end profile (1), according to at least one of the preceding claims, **characterised** in that the structure (19) of the inner contact surface (14) of the profile (1) is arranged on both sides of the opening (8, 23).

7. Tailboard end profile (1), according to at least one of the preceding claims, **characterised** in that the structure (19) is arranged on the contact surface (13) of the holding part (5) on both sides of the holding recesses (11, 12).

8. Tailboard end profile (1), according to at least one of the preceding claims, **characterised** in that when designing the structure (19) on two inner surfaces (14, 14') offset to each other by 90°, the opening (8, 23) in at least one of these walls (7, 21) of the profile is constructed as an elongated hole.

## Revendications

1. Profile (1) de liaison/fermeture de bordage ou de bordure de paroi, de préférence pour un véhicule industriel, muni d'un contre appui (2), destiné à coopérer en particulier avec une contre fiche (3) de verrouillage de bordure de paroi, dans lequel le contre appui (2) est en appui sur le profilé de l'extérieur est relié à l'aide d'une pièce d'appui (5) disposée dans le profilé (1), pour assurer la fixation sur le profilé (1) par engagement ou par enfoncement à travers une ouverture de passage (8, 23) ménagée dans le profilé (1) et par appui de la pièce d'appui (5) sur une surface intérieure (14) du profilé (1), ladite ouverture de traversée (8, 23) autorisant un décalage de la liaison contre-appui (2)/pièce d'appui (5) (à l'état verrouillé) dans une direction (selon la hauteur), caractérisé en ce que l'une des surfaces d'appui en regard (13, 14) de la pièce d'appui (5) et/ou du profilé (1) présente une structure assurant une fixation à conjugaison de forme et en ce que l'ouverture de traversée (8, 23) autorise un décalage de la liaison contre appui (2)/pièce d'appui (5) selon deux directions.

2. Profilé (1) de bordure de liaison de paroi, en particulier selon la revendication (1), caractérisé en ce que la structure (19) est orientée dans la direction longitudinale du profilé (1), c'est-à-dire à l'état monté dans le sens de la hauteur (V).

3. Profilé (1) de liaison de bordure de paroi, en particulier selon une ou plusieurs des revendications précédentes, caractérisé en ce que la structure (19) est constituée de nervures (20, 20a, 20b) disposées longitudinalement.

4. Profilé (1) de liaison de bordure de paroi, en particulier selon une ou plusieurs des revendications précédentes, caractérisé en ce que la structure (19) est réalisée sur deux surfaces intérieures (14, 14') du profilé (1) décalé d'environ 90° l'une par rapport à l'autre.

5. Profilé (1) de liaison de bordure de paroi, selon une ou plusieurs des revendications précédentes, dans lequel la pièce d'appui (5) comporte des évidement d'appui (11, 12), caractérisé en ce que les évidements d'appui (11, 12) sont disposés de façon excentrique par rapport à l'extension transversale de la pièce d'appui (5).

6. Profilé (1) de liaison de bordure de paroi, selon une ou plusieurs des revendications précédentes, caractérisé en ce que la structure (19) de la surface intérieure de montage (14) du profilé (1) est formée des deux côtés de l'ouverture de traversée (8, 23).

7. Profilé (1) de liaison de bordure de paroi, selon une ou plusieurs des revendications précédentes, caractérisé en ce que la structure (19) est réalisée sur une surface d'appui (13) de la pièce d'appui (5) des deux côtés des évidements d'appui (11, 12).

8. Profilé (1) de liaison de bordure de paroi, selon une ou plusieurs des revendications précédentes, caractérisé en ce qu'au cours de la réalisation de la structure (19) sur deux surfaces intérieures (14, 14') décalées l'une par rapport à l'autre de 90°, l'ouverture de traversée (8, 23), est réalisée au moins dans une paroi choisie dans ce but (7, 21) du profilé sous la forme d'un trou oblong (23).
